# EUROPEAN PATENT SPECIFICATION

(11) **EP 3 882 034 B1**
(45) Date of publication and mention of the grant of the patent: **06.09.2023**
(21) Application number: 19885306.1
(22) Date of filing: 23.07.2019
(51) Int. Cl.: B41F 17/22, B41J 3/407, B41J 3/413, G01N 21/90, B41J 11/00

(54) **PRINTING SYSTEM AND METHOD FOR MANUFACTURING CAN BODY**
DRUCKSYSTEM UND VERFAHREN ZUR HERSTELLUNG EINES DOSENKÖRPERS
SYSTÈME D'IMPRESSION ET PROCÉDÉ DE FABRICATION DE CORPS DE CANETTE

(30) Priority: 12.11.2018 JP 2018212473
(43) Date of publication of application: 22.09.2021
(73) Proprietor: ALTEMIRA Co., Ltd., Tokyo 112-8525 (JP)
(72) Inventor: TAKADA, Hiroki, Bunkyo-ku, Tokyo 112-8525 (JP)
(74) Representative: Strehl Schübel-Hopf & Partner
(86) International application number: PCT/JP2019/028832
(87) International publication number: WO 2020/100348

(56) References cited:
- WO-A1-2017/187863
- WO-A1-2018/008315
- JP-A- 2002 352 222
- JP-A- 2012 086 870
- JP-A- 2013 544 675
- JP-A- 2016 032 879
- US-A1- 2013 176 358
- US-A1- 2017 066 232
- US-A1- 2017 157 964

## Description

### Technical Field

The present invention relates to a printing system and a method for manufacturing a can body.

### Background Art

Patent Document 1 discloses a printed layer that has an image formed by plate-based printing and an image formed by ink-jet printing and is covered with a finishing varnish layer.

### Citation List

### Patent Literature

Patent Document 1: Japanese Patent Application Laid-Open Publication No. 2012-086870
Patent Document 2: US Patent Application Laid-Open Publication No. 2017-157964 1
Patent Document 3: US Patent Application Laid-Open Publication No. 2013176358

### Summary of Invention

### Technical Problem

An image formed on a can body may be subjected to inspection to check whether the image satisfies predetermined conditions.

Applying paint on an image formed on a can body may change a state of the image and thus make it difficult to detect a defect in the image that has occurred during formation of the image.

An object of the present invention is to increase accuracy of detecting defects occurring in images formed on an outer surface of a can body.

### Solution to Problem

A first aspect of the present invention is a printing system including: an image forming unit configured to form an image on an outer surface of a can body; a paint application unit configured to apply transparent paint onto the outer surface after the image is formed on the outer surface by the image forming unit; and an inspection unit configured to inspect the image formed on the outer surface by the image forming unit, before application of the paint onto the outer surface by the paint application unit.

In the above aspect, the inspection unit may include an imaging unit configured to photograph the image on the outer surface, and the imaging unit may be configured to photograph the image on the outer surface of the can body when the can body is positioned on a can body movement route of a linear shape.

In the above aspect, the printing system may further include a discharge unit configured to discharge a can body that is found to satisfy predetermined conditions as a result of inspection by the inspection unit, from a can body movement route being a movement route for the can body. The discharge unit may be configured to discharge the can body from the can body movement route when the can body is positioned on a curvature portion of the can body movement route.

In the above aspect, the image forming unit may be configured to form the image on the outer surface of the can body when the can body is positioned on a can body movement route of a linear shape, and the inspection unit may be configured to inspect the image on the outer surface of the can body when the can body is positioned on the can body movement route of the linear shape.

In the above aspect, the can body movement route of the linear shape may be disposed along a horizontal direction.

In the above aspect, a downward can body movement route that goes downward or an upward can body movement route that goes upward may be provided downstream, in a moving direction of a can body, from the can body movement route of the linear shape disposed along the horizontal direction. The printing system may further include a discharge unit configured to discharge a can body that is found to satisfy predetermined conditions as a result of inspection by the inspection unit, from a can body movement route. The discharge unit may be configured to discharge a can body satisfying the predetermined conditions when the can body is positioned on the downward can body movement route or the upward can body movement route.

In the above aspect, the paint application unit may be configured apply pained onto a can body when the can body is positioned on the downward can body movement route or the upward can body movement route.

In the above aspect, the printing system may further include a discharge unit configured to discharge a can body that is found to satisfy predetermined conditions as a result of inspection by the inspection unit, from a can body movement route. The discharge unit may be disposed upstream from the paint application unit in a moving direction of a can body.

In the above aspect, the printing system may further include a curing unit configured to cure an image formed on the outer surface by the image forming unit. The inspection unit may be configured to inspect an image that has been cured by the curing unit and has not had the transparent paint applied thereon.

In the above aspect, the can body may include an opening. The printing system may further include a necking unit configured to reduce a diameter of the opening of the can body. The inspection unit may be configured to inspect the image before the necking unit reduces the diameter of the opening of the can body.

A second aspect of the present invention is a method for manufacturing a can body having an image formed thereon. The method includes: forming an image on an outer surface of a can body; applying transparent paint onto the outer surface after the image is formed on the outer surface; and inspecting the image formed on the outer surface, before application of the paint onto the outer surface.

### Advantageous Effects of Invention

The present invention increases accuracy of detecting defects occurring in images formed on an outer surface of a can body.

### Brief Description of Drawings

FIG. 1 is a side view of a printing system.
FIG. 2 illustrates a first inspection device.
FIG. 3 illustrates a process in a necking device.
FIG. 4 shows another configuration example of the printing system.
FIG. 5 illustrates a second inspection device.
FIG. 6 illustrates a first inkjet head, a second inkjet head, and a moving unit when they are viewed in the direction of an arrow VI in FIG. 1.

### Description of Embodiments

Hereinafter, an exemplary embodiment of the present invention will be described with reference to attached drawings.

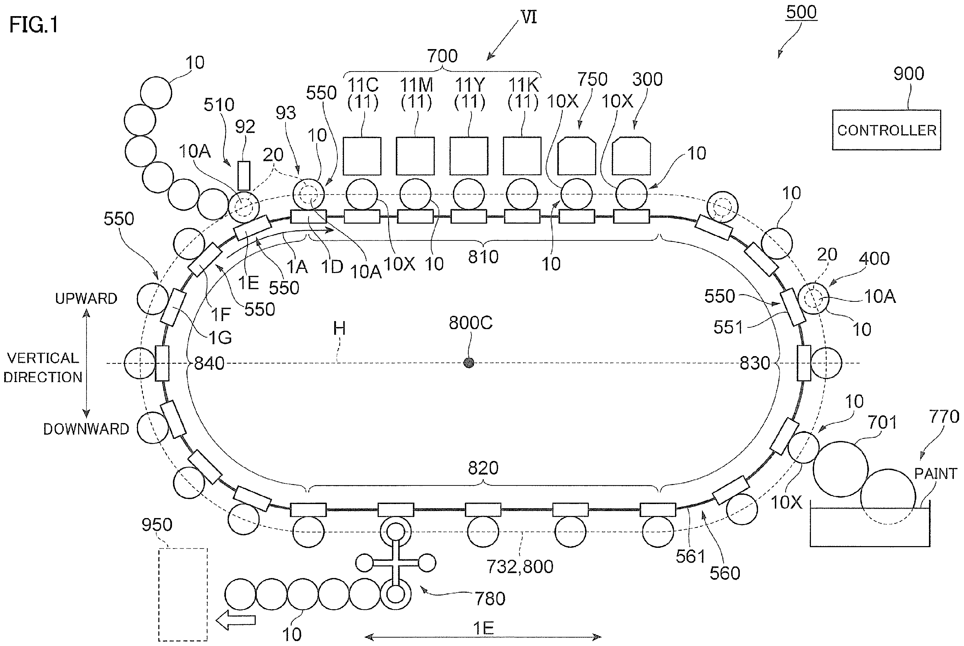

FIG. 1 is a side view of a printing system 500.

The printing system 500 includes a can body supply part 510 to which can bodies 10 are supplied. In the can body supply part 510, the can body 10 is supplied (attached) to a support member 20 supporting the can body 10.

Specifically, the support member 20 is of a cylindrical shape and inserted into the cylindrical can body 10, whereby the can body 10 is supplied to each support member 20.

The printing system 500 further includes plural moving units 550 as an example of moving bodies that move while supporting the can bodies 10.

In the exemplary embodiment, the support member 20 supporting the can body 10 is attached to the moving unit 550, and the can body 10 moves together with the moving unit 550.

FIG. 1 shows the case in which the moving unit 550 supports a single can body 10; however, as described later, plural can bodies 10 may be placed on a single moving unit 550 to cause the single moving unit 550 to support plural can bodies 10.

The support member 20 is of a cylindrical shape and provided such that it is rotatable in the circumferential direction. In the exemplary embodiment, the can body 10 is supported by this circumferentially rotatable support member 20, so that the can body 10 is supported such that it is also rotatable in the circumferential direction.

The can body 10 is of a cylindrical shape and has an opening at its one end. The other end of the can body 10 is closed and provided with a bottom 10A. The support member 20 is inserted into the can body 10 from the opening.

In the exemplary embodiment, the printing system 500 further includes a moving mechanism 560 that functions as a mover unit that moves the moving units 550. The moving mechanism 560 includes an annular guide member 561 that guides the moving units 550.

Each of the moving units 550 is guided by the guide member 561 and orbitally moves along a predetermined annular movement route 732. In the exemplary embodiment, this causes the support member 20 provided to each moving unit 550 to also move along the annular movement route 732.

Additionally, in the exemplary embodiment, the can body 10 supported by the support member 20 moves along a predetermined can body movement route 800 of an annular shape.

The can body movement route 800 is disposed such that the axial center 800C thereof lies along the horizontal direction. To put it another way, the can body movement route 800 is disposed around the axial center 800C along the horizontal direction. Here, the axial center 800C extends in a direction perpendicular to the page in FIG. 1.

In this case, in the exemplary embodiment, the support member 20 and the can body 10 orbitally move around the axial center 800C extending in the direction perpendicular to the page in the figure.

The can body movement route 800 includes a first linear part 810, which is a linear can body movement route, and a second linear part 820, which is similarly a linear can body movement route.

Each of the first linear part 810 and the second linear part 820 is disposed to extend along the horizontal direction. The first linear part 810 and the second linear part 820 are disposed substantially in parallel with each other. In the exemplary embodiment, the first linear part 810 is disposed above the second linear part 820.

The first linear part 810 is located in an uppermost portion of the annular can body movement route 800, while the second linear part 820 is located in a lowermost portion of the annular can body movement route 800.

The can body movement route 800 further includes a first curved part 830 and a second curved part 840, each of which is formed into an arc with a curvature.

The first curved part 830 connects a right end of the first linear part 810 in the figure and a right end of the second linear part 820 in the figure. In addition, the first curved part 830 heads downward from above.

To further illustrate, the first curved part 830 in the exemplary embodiment is located downstream from the first linear part 810 in the moving direction of the can bodies 10.

The first curved part 830 goes downward as it progresses downstream in the moving direction of the can bodies 10. Here, the first curved part 830 can be regarded as a downward can body movement route that goes downward as it progresses downstream in the moving direction of the can bodies 10.

In the exemplary embodiment, the can body movement route 800 further includes the second curved part 840. The second curved part 840 connects a left end of the first linear part 810 in the figure and a left end of the second linear part 820 in the figure. In addition, the second curved part 840 heads upward from below.

The can body supply part 510 further includes a first inspection device 92.

The first inspection device 92 inspects the can bodies 10 for any deformation.

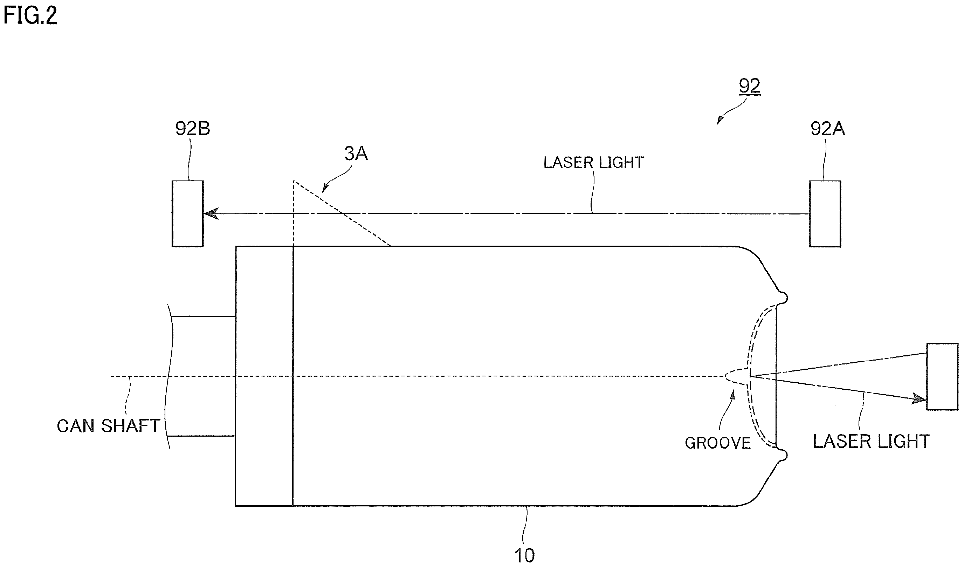

More specifically, as shown in FIG. 2 (a diagram illustrating the first inspection device 92), the first inspection device 92 includes a light source 92A.

The light source 92A is disposed near one end of the can body 10 and emits a laser light that travels in an axial direction of the can body 10 along the outer circumferential surface of the can body 10. Further, a light receiving part 92B that receives the laser light from the light source 92A is disposed near the other end of the can body 10.

When a part of the can body 10 is deformed as indicated by the reference sign 3A, the laser light is cut off and the light receiving part 92B cannot receive the laser light. Consequently, deformation of the can body 10 is detected.

Then, in the exemplary embodiment, when it is determined by the first inspection device 92 that a can body 10 does not satisfy predetermined conditions (when it is determined that the can body 10 is deformed), a first discharge mechanism 93 (see FIG. 1) discharges that can body 10 to the outside of the printing system 500.

In the first discharge mechanism 93, compressed air is supplied into the cylindrical support member 20, causing the can body 10 to move in the axial direction thereof (in the direction perpendicular to the page in FIG. 1).

Further, the bottom 10A (the closed end) of the can body 10 is sucked by a suction member (not shown). The suction member thus conveys the can body 10 to the outside of the printing system 500, discharging the can body 10 to the outside of the printing system 500.

On a downstream side of the first discharge mechanism 93, an inkjet printing part 700 is provided.

The inkjet printing part 700 as an example of an image forming unit forms an image, by an inkjet printing method, on an outer surface 10X (outer circumferential surface) of the can body 10 having moved from the upstream side.

To further illustrate, in the exemplary embodiment, for image formation by the inkjet printing part 700, moving units 550 sequentially move toward the inkjet printing part 700 from an upstream side of the inkjet printing part 700 (refer to the arrow 1A).

Then, in the exemplary embodiment, the inkjet printing part 700 forms images on the can bodies 10 on the respective moving units 550.

Here, image formation by the inkjet printing method refers to image formation by ejecting ink from inkjet heads 11 to attach the ink to the can body 10.

Any of known inkjet printing methods can be used for image formation. Specific examples include piezo inkjet printing, thermal (bubble) inkjet printing, and continuous inkjet printing.

On a downstream side of the inkjet printing part 700, a light irradiation part 750 is provided as an example of a curing unit.

The light irradiation part 750 includes a light source (not shown) and irradiates with light the outer surface 10X of the can body 10 having had an image formed thereon by the inkjet printing part 700, to thereby cure the image on the outer surface 10X.

The inkjet printing part 700 forms an image with ultraviolet curable ink. To further illustrate, the inkjet printing part 700 forms an image with actinic radiation curable ink.

The light irradiation part 750 irradiates the formed image with light, such as ultraviolet light. This cures the image formed on the outer surface 10X of the can body 10.

On a downstream side of the light irradiation part 750, a second inspection device 300 as an example of an inspection unit is provided. The second inspection device 300 inspects the images on the outer surfaces 10X of the respective can bodies 10 formed by the inkjet printing part 700.

In the exemplary embodiment, the second inspection device 300 is provided upstream from a protection layer forming part 770 (described later) in the moving direction of the can bodies 10. As such, in the exemplary embodiment, the second inspection device 300 inspects the images formed on the respective can bodies 10 before the protection layer forming part 770 applies paint onto the can bodies 10.

The inkjet printing part 700, the light irradiation part 750, and the second inspection device 300 are disposed beside the first linear part 810.

A second discharge mechanism 400 as an example of a discharge unit is provided downstream from the second inspection device 300 in the moving direction of the can bodies 10. The second discharge mechanism 400 discharges the can bodies 10 positioned on the can body movement route 800 to the outside of the can body movement route 800.

The second discharge mechanism 400 discharges, to the outside of the can body movement route 800, the can bodies 10 that are found to satisfy predetermined conditions as a result of the inspection by the second inspection device 300. In other words, the second discharge mechanism 400 discharges, to the outside of the can body movement route 800, can bodies having a defect in the images formed thereon, or so-called defective cans.

In the second discharge mechanism 400, compressed air is supplied into the cylindrical support member 20, causing the can body 10 to move in the axial direction thereof (in the direction perpendicular to the page in FIG. 1), similarly to the first discharge mechanism 93.

Further, the bottom 10A (the closed end) of the can body 10 is sucked by a suction member (not shown). The suction member thus conveys the can body 10 to the outside of the printing system 500, discharging the can body 10 to the outside of the printing system 500. To further illustrate, the can body 10 is conveyed and discharged to the outside of the can body movement route 800.

In the exemplary embodiment, the protection layer forming part 770 is provided downstream from the second discharge mechanism 400 in the moving direction of the can bodies 10.

The protection layer forming part 770 as an example of a paint application unit applies transparent paint onto the outer surface 10X of each can body 10 having had an image formed thereon by the inkjet printing part 700. More specifically, the protection layer forming part 770 brings a rollshaped member 701 having paint on its outer circumferential surface into contact with the outer surface 10X of the can body 10 to thereby apply the transparent paint onto the outer surface 10X.

To further illustrate, the protection layer forming part 770 applies the transparent paint onto the image formed by the inkjet printing part 700 to form a transparent layer covering the image. This forms a transparent protection layer as the outermost layer of the can body 10.

On the downstream side of the protection layer forming part 770, a detachment part 780 detaching the can body 10 from the support member 20 is provided.

In the exemplary embodiment, the can body 10 is detached from the support member 20 in the detachment part 780 to be discharged to the outside of the printing system 500.

In the exemplary embodiment, a necking device 950 as an example of a necking unit is provided downstream from the detachment part 780 in the moving direction of the can bodies 10. The necking device 950 reduces the diameter of the opening of the can body 10.

Applying transparent paint onto the image formed on the can body 10 as in the exemplary embodiment may render a defect in the image that has occurred during formation of the image less discernable.

To further illustrate, even when there is a defect, such as lack of dots, in a part of the image formed by the inkjet printing part 700, applying paint renders the defect less discernable, which increases the possibility that the second inspection device 300 fails to detect the defect.

In contrast, the arrangement in the exemplary embodiment, in which the second inspection device 300 is provided upstream from the protection layer forming part 770 to inspect the images prior to application of the paint onto the can bodies 10 by the protection layer forming part 770, facilitates detection of any defect in the images.

To further illustrate, this arrangement, in which the inspection of the images is carried out prior to application of the paint onto the can bodies 10 by the protection layer forming part 770, facilitates detection of any defect in the images because the inspection of the images is carried out in the state where no paint is applied onto the can bodies 10.

While the images are formed on the can bodies 10 by the inkjet heads 11 in the exemplary embodiment, the images may be formed on the can bodies 10 by plate-based printing such as relief printing.

In this case too (in the case where plate-based printing is carried out), inspecting the images prior to application of paint facilitates detection of any defect in the images.

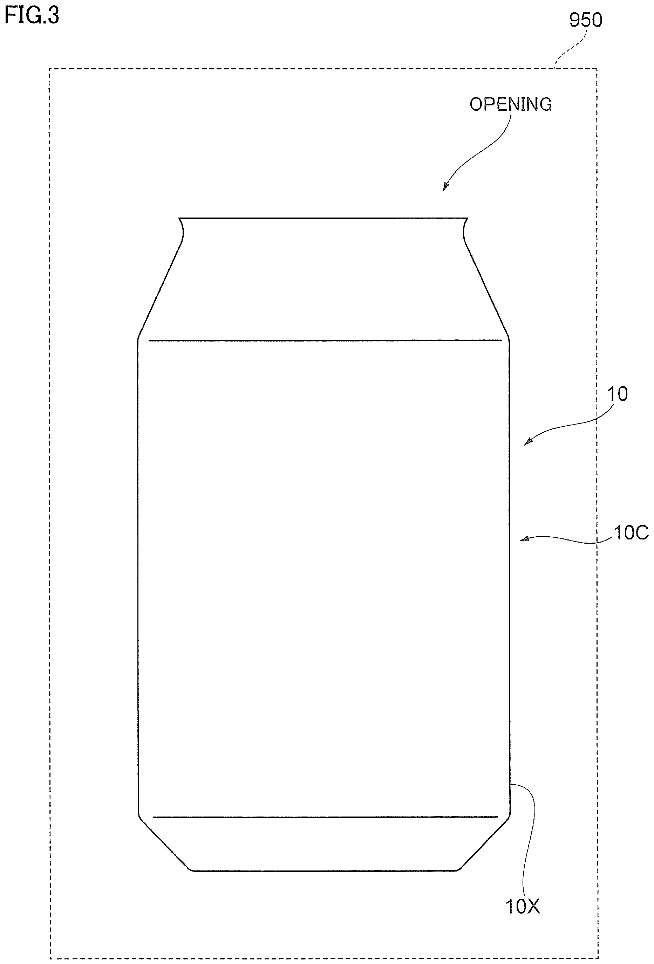

The necking device 950 reduces the diameter of the opening of each can body 10 as shown in FIG. 3 (a diagram illustrating a process in the necking device 950).

Specifically, in the necking device 950, a die (not shown) is pressed against the outer surface 10X (outer circumferential surface) and the opening of the can body 10.

This makes the outer diameter of the can body 10 at its opening smaller than the outer diameter at its center portion 10C (center portion 10C in the axial direction of the can body 10).

A further description will be given of the printing system 500 of the exemplary embodiment with reference to FIG. 1.

As shown in FIG. 1, in the exemplary embodiment, the second discharge mechanism 400 is provided at the first curved part 830, which is an example of the downward can body movement route.

Thus, in the exemplary embodiment, the second discharge mechanism 400 discharges defective cans (can bodies 10 that are found by inspection to satisfy predetermined conditions) from the first curved part 830 with a curvature when they are positioned on the first curved part 830.

The second discharge mechanism 400 may also be provided at the first linear part 810, for example. But in this case, the first linear part 810 will be longer, so that the dimension of the printing system 500 in the direction denoted by the reference sign 1E will be larger. This will lead to an increase in a footprint of the printing system 500.

In contrast, providing the second discharge mechanism 400 at the first curved part 830 as the downward can body movement route, as in the exemplary embodiment, can make the dimension of the printing system 500 in the direction denoted by the reference sign 1E smaller, helping to reduce the footprint of the printing system 500.

While in the exemplary embodiment the second discharge mechanism 400 is provided at the first curved part 830 as the downward can body movement route, the footprint of the printing system 500 can also be reduced by providing the second discharge mechanism 400 at an upward can body movement route, on which the can bodies 10 move upward.

More specifically, for example, the footprint of the printing system 500 can also be reduced with an arrangement in which the second discharge mechanism 400 is provided at the second curved part 840 in FIG. 1 to discharge the can bodies 10 when they are positioned on the second curved part 840.

In this case, the protection layer forming part 770 and the detachment part 780 will be located downstream from the second discharge mechanism 400 provided at the second curved part 840.

Now the inkjet printing part 700 will be described.

The inkjet printing part 700 shown in FIG. 1 is disposed above the first linear part 810 to form an image on each can body 10 positioned on the first linear part 810.

The inkjet printing part 700 is provided with plural inkjet heads 11 arranged in line in the right-left direction in the figure. The portion where the plural inkjet heads 11 are arranged can be regarded as an image forming unit that forms an image on the can body 10.

Specifically, the inkjet printing part 700 is provided with the first inkjet head 11C ejecting the cyan ink, the second inkjet head 11M ejecting the magenta ink, the third inkjet head 11Y ejecting the yellow ink, and the fourth inkjet head 11K ejecting the black ink.

In the following description, the first inkjet head 11C to the fourth inkjet head 11K are collectively referred to as "inkjet heads 11" unless particular distinction among them are necessary.

While the exemplary embodiment illustrates the case in which the four inkjet heads 11 are provided, the inkjet printing part 700 may further include an inkjet head 11 ejecting ink of a special color, such as a corporate color, and an inkjet head 11 for forming a white layer.

The four inkjet heads 11, namely, the first inkjet head 11C to the fourth inkjet head 11K form an image on the can body 10 with the ultraviolet curable ink.

In the exemplary embodiment, the can body 10 is moved in a state of being laid (the can body 10 is moved in the state in which the axial direction of the can body 10 is horizontal), and a part of the outer surface 10X of the can body 10 faces upward in the vertical direction.

In the exemplary embodiment, ink is ejected downwardly from above the outer surface 10X of the can body 10 to thereby form an image on the outer surface 10X.

In the exemplary embodiment, the moving unit 550 stops below each inkjet head 11, and the ink is ejected onto the can body 10 on the moving unit 550 to thereby form an image on the can body 10.

In the exemplary embodiment, when image formation on the can body 10 is finished, the moving unit 550 moves to another inkjet head 11 located immediately downstream, and image formation on the can body 10 is further performed at this inkjet head 11.

Further, in the exemplary embodiment, the four inkjet heads 11 are arranged in the moving direction of the can bodies 10. Each of the four inkjet heads 11 is disposed along a direction perpendicular to (crossing) the moving direction of the can bodies 10.

In the exemplary embodiment, ink is ejected onto the can body 10 from above as the can body 10 passes under the four inkjet heads 11, and thereby an image is formed on the can body 10.

More specifically, in the exemplary embodiment, the moving unit 550 stops at the installation location of each of the plural inkjet heads 11.

Then, ink is ejected from each of the inkjet heads 11 onto the can body 10 to form an image thereon. When the image is formed on the can body 10 by each inkjet head 11, the can body 10 rotates in the circumferential direction.

Each of the moving units 550, as an example of a moving body, moves at a predetermined moving speed.

Each of the moving units 550 stops at each of the can body supply part 510, the first inspection device 92, the first discharge mechanism 93, each inkjet head 11, the light irradiation part 750, the second inspection device 300, the second discharge mechanism 400, the protection layer forming part 770, and the detachment part 780.

At the installation location of each of the first inspection device 92, each inkjet head 11, the light irradiation part 750, the second inspection device 300, the protection layer forming part 770 and the like, the can body 10 on the moving unit 550 rotates in the circumferential direction at a predetermined rotation speed.

In addition, in the printing system 500 of the exemplary embodiment, more moving units 550 than the number of can bodies 10 positioned in the printing system 500 are installed. Further, the moving units 550 move around the axial center 800C.

The moving mechanism 560 includes the annular guide member 561 that guides the moving units 550. Inside the guide member 561, electromagnets (not shown) are provided.

Further, a permanent magnet (not shown) is installed in each moving unit 550.

In the exemplary embodiment, a linear-motor mechanism is used to move the moving units 550.

More specifically, the printing system 500 of the exemplary embodiment includes a controller 900, which controls energization to the above-described electromagnets to thereby generate magnetic fields and move each of the moving units 550. Note that the controller 900 is composed of a program-controlled central processing unit (CPU).

As shown in FIG. 1, the moving unit 550 includes a pedestal part 551 that is guided by the guide member 561. The permanent magnet (not shown) is installed in the pedestal part 551.

In the exemplary embodiment, a propulsive force occurs in the moving unit 550 by magnetic fields generated by the electromagnets provided in the guide member 561 and the permanent magnet provided in the pedestal part 551 of the moving unit 550, causing the moving unit 550 to move along the annular movement route 732.

The moving unit 550 of the exemplary embodiment further includes the cylindrical support member 20 supporting the can body 10 and a fixing member (not shown) for fixing the support member 20 to the pedestal part 551.

The support member 20 is formed into the cylindrical shape and inserted into the can body 10 through the opening thereof to support the can body 10. In addition, the support member 20 is disposed in the state of being laid (state of being horizontal). Consequently, in the exemplary embodiment, the can body 10 is also disposed in the state of being laid.

In the exemplary embodiment, when the can body 10 reaches each of the inkjet heads 11, ink is ejected from each of the inkjet heads 11 onto the can body 10 positioned below. Consequently, an image is formed on the outer surface 10X of the can body 10.

The light irradiation part 750 is disposed on the downstream side of the inkjet printing part 700 and irradiates the can body 10 with the ultraviolet light being an example of light. This cures the image formed on the outer circumferential surface of the can body 10 (the image formed by the inkjet printing part 700).

Note that thermosetting ink may also be used for image formation on the can body 10; in this case, for example, a heat source, instead of the light source, is installed at the location where the light irradiation part 750 is provided.

In the exemplary embodiment, the moving unit 550 stops every time the moving unit 550 reaches below each of the inkjet heads 11. In other words, the moving unit 550 stops at each of predetermined stop locations.

Then, in the exemplary embodiment, an image is formed by each inkjet head 11, which is an example of the image forming unit, on the outer surface 10X of the can body 10 held by the moving unit 550 stopped at each predetermined stop location.

More specifically, at the installation location of each of the inkjet heads 11, ink is ejected from each inkjet head 11 while the support member 20 (the can body 10) rotates in the circumferential direction, to thereby form an image on the outer surface 10X of the can body 10.

In the exemplary embodiment, upon the support member 20 rotating 360° after ejection of ink is started, the inkjet head 11 stops ejecting ink. This results in an image being formed on the entire region in the circumferential direction of the outer surface 10X of the can body 10.

In the exemplary embodiment, the support member 20 shown in FIG. 1 is disposed along the direction perpendicular to the page in FIG. 1. To put it another way, the support member 20 is disposed to extend along the horizontal direction.

Moreover, the support member 20 is disposed along the direction perpendicular to (crossing) the moving direction of the moving unit 550.

In the exemplary embodiment, the inkjet heads 11 are positioned above the can body 10, and the ink is ejected to the can body 10 from above.

In this case, as compared to the case in which the inkjet heads 11 are disposed lateral to or below the can body 10, it is possible to reduce the effect of gravity acting on ink droplets ejected from the inkjet heads 11, to thereby increase accuracy of ink landing positions on the can body 10.

Further, in the exemplary embodiment, the inkjet printing part 700 (the plural inkjet heads 11) is provided beside (above) the first linear part 810.

This helps increase quality of images to be formed on the can bodies 10 as compared to the case in which the inkjet printing part 700 (the plural inkjet heads 11) is provided beside the curved part (the first curved part 830 or the second curved part 840).

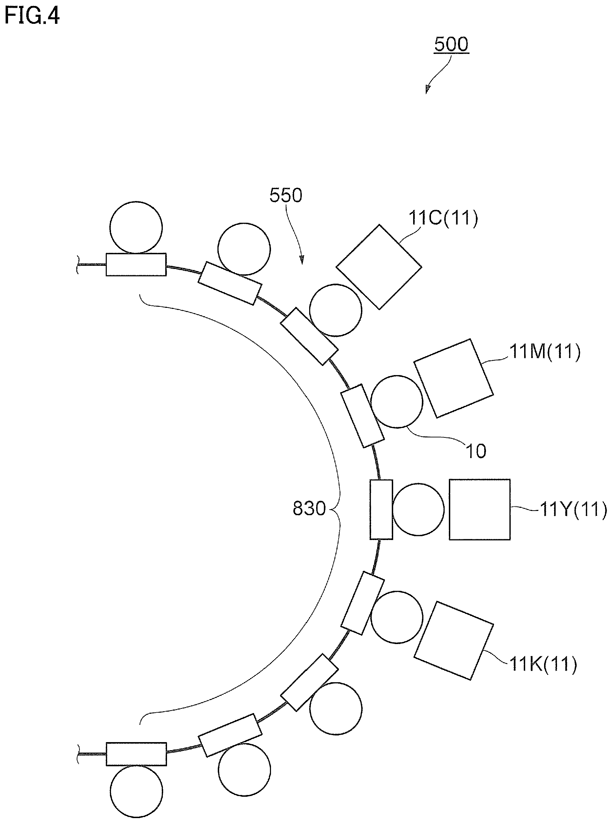

Here, in the case where the inkjet heads 11 are provided beside the curved part, for example, as shown in FIG. 4 (a diagram showing another configuration example of the printing system 500), the inkjet heads 11 have different orientations from each other.

Such arrangement is likely to decrease the quality of images to be formed, such as causing misalignment of images formed by the respective inkjet heads 11, as compared to when the orientations of the inkjet heads 11 are aligned.

In contrast, providing the inkjet printing part 700 beside the linear part (the first linear part 810) as in the exemplary embodiment allows for easy alignment of the orientations of the plural inkjet heads 11, avoiding a decrease in the quality of images to be formed.

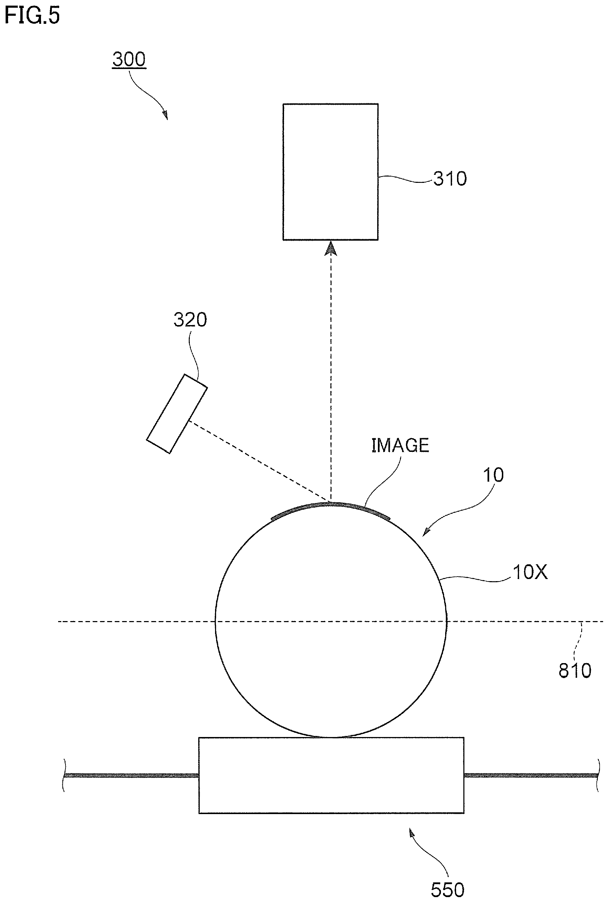

FIG. 5 illustrates the second inspection device 300.

The second inspection device 300 of the exemplary embodiment includes an imaging device 310 as an example of an imaging unit to photograph the image formed on the outer surface 10X of the can body 10. The imaging device 310 is composed of an image sensor such as a charge coupled device (CCD) sensor. The second inspection device 300 further includes a light source 320 that emits light with which the can body 10 is irradiated.

The second inspection device 300 analyzes the image captured by the imaging device 310 to inspect the image formed on the outer surface 10X of the can body 10.

More specifically, for example, the second inspection device 300 inspects the image formed on the outer surface 10X of the can body 10 for any defect by comparing the image captured by the imaging device 310 with a prestored reference image.

In the exemplary embodiment, the imaging device 310 photographs the image formed on the outer surface 10X of the can body 10 when the can body 10 is positioned on the first linear part 810.

To further illustrate, in the exemplary embodiment, the second inspection device 300 inspects the image formed on the outer surface 10X of the can body 10 when the can body 10 is positioned on the first linear part 810.

The exemplary embodiment thus increases the accuracy of inspection of the image formed on the can body 10, as compared to inspecting the can body 10 (photographing the can body 10) when the can body 10 is positioned on the first curved part 830 or the like that has a curvature.

The stop position accuracy of the can body 10 tends to decrease at portions with a curvature in the can body movement route 800.

At such portions, the position of the can body 10 tends to fluctuate when the imaging device 310 photographs the can body 10, which will lead to decrease in the accuracy of image inspection.

In contrast, inspecting (photographing) the can body 10 when the can body 10 is positioned on the first linear part 810 as in the exemplary embodiment helps increase the accuracy of inspection of the image on the can body 10 because the position of the can body 10 is less likely to fluctuate on the first linear part 810.

Additionally, in the exemplary embodiment, the second inspection device 300 inspects the image formed on the can body 10 when the can body 10 is positioned on the first linear part 810 disposed along the horizontal direction.

The exemplary embodiment thus increases the accuracy of inspection of the image on the can body 10, as compared to inspecting the can body 10 when the can body 10 is positioned on the first curved part 830 being the downward can body movement route or inspecting the can body 10 when the can body 10 is positioned on the second curved part 840 being the upward can body movement route.

The stop position accuracy of the can body 10 tends to decrease at upward-inclined or downward-inclined portions in the can body movement route 800. At such portions, similarly to the above, the position of the can body 10 tends to fluctuate, which will lead to decrease in the accuracy of image inspection.

In contrast, inspecting the can body 10 when the can body 10 is positioned on the horizontally disposed first linear part 810 as in the exemplary embodiment helps increase the accuracy of inspection of the can body 10.

Additionally, in the exemplary embodiment, both of the inkjet printing part 700 and the second inspection device 300 are disposed at the first linear part 810, as shown in FIG. 1.

In the exemplary embodiment, the inkjet printing part 700 forms an image on the can body 10 when the can body 10 is positioned on the first linear part 810, and the second inspection device 300 also inspects the image formed on the can body 10 when the can body 10 is positioned on the first linear part 810.

This increases the quality of the image formed on the can body 10, as compared to the case where either or both of the inkjet printing part 700 and the second inspection device 300 is positioned at the first curved part 830 or the like having a curvature.

As described above, in the exemplary embodiment, the second discharge mechanism 400 is disposed on the first curved part 830, rather than the first linear part 810, and discharges the can body 10 from the can body movement route 800 when the can body 10 is positioned on this first curved part 830 having a curvature.

Discharge of the can body 10 does not require accurate positioning of the can body 10, as compared to when an image is formed on the can body 10 and when the second inspection device 300 inspects the can body 10.

Hence, in the exemplary embodiment, the discharge mechanism 400 is provided at the first curved part 830 rather than the first linear part 810.

Providing the second discharge mechanism 400 at the first curved part 830 helps reduce the footprint of the printing system 500, as compared to providing the second discharge mechanism 400 at the first linear part 810.

While in the exemplary embodiment the second discharge mechanism 400 is provided at the first curved part 830 being the downward can body movement route, the second discharge mechanism 400 may be provided at the second curved part 840 being the upward can body movement route such that the second discharge mechanism 400 discharges the can body 10 from the can body movement route 800 when the can body 10 is positioned on the second curved part 840.

In this case, the protection layer forming part 770 and the detachment part 780 will be located downstream from the second discharge mechanism 400 provided at the second curved part 840.

In the exemplary embodiment, the protection layer forming part 770 as an example of the paint application unit is also provided at the first curved part 830 as shown in FIG. 1, and the protection layer forming part 770 applies paint onto the can body 10 when the can body 10 is positioned on the first curved part 830.

As is similar to the case of providing the second discharge mechanism 400 at the first curved part 830, this arrangement helps reduce the footprint of the printing system 500, as compared to providing the protection layer forming part 770 at the first linear part 810.

Alternatively, the protection layer forming part 770 may be provided at the second curved part 840 being the upward can body movement route. In this case, the detachment part 780 will be located downstream from the protection layer forming part 770 provided at the second curved part 840.

In the exemplary embodiment, the second discharge mechanism 400 is located upstream from the protection layer forming part 770 in the moving direction of the can bodies 10, as shown in FIG. 1.

Hence, in the exemplary embodiment, defective cans are discharged from the can body movement route 800 before application of paint thereon. This can reduce consumption of paint as compared to applying paint even onto defective cans.

In the exemplary embodiment, the second inspection device 300 inspects the image that has been cured by the light irradiation part 750 and has not had paint applied thereon.

To further illustrate, in the exemplary embodiment, the second inspection device 300 is disposed downstream from the light irradiation part 750 and upstream from the protection layer forming part 770 in the moving direction of the can bodies 10, and thus inspects the image that has been subjected to curing by the light irradiation part 750 but has not had paint applied thereon.

Inspecting the image before its curing may be ineffective because the state of the image may change after the inspection due to change in the image as a result of curing. Also, inspecting the image after application of paint on its surface may fail to detect any defect that has occurred during formation of the image because the paint makes the defect less discernable, as described above.

In contrast, inspecting the image that has been subjected to curing by the light irradiation part 750 but has not had paint applied thereon, as in the exemplary embodiment, makes it possible not only to avoid situations where the image changes after the inspection but also to detect any defect in the image more accurately.

In the exemplary embodiment, the necking device 950 (see FIG. 1) is located downstream from the second inspection device 300 in the moving direction of the can bodies 10; in the exemplary embodiment, the second inspection device 300 inspects the image before the necking device 950 reduces the diameter of the opening of the can body 10.

Reducing the diameter of the opening of the can body 10 by the necking device 950 may cause distortion of the can body 10. Hence, if the second inspection device 300 inspects the image after the diameter of the opening has been reduced, such inspection may have low inspection accuracy due to distortion of the can body 10.

To further illustrate, if the second inspection device 300 inspects the image after the diameter of the opening has been reduced, such inspection may have low inspection accuracy because, for example, any defect actually occurring in the image may be rendered undetectable by distortion of the can body 10.

In contrast, inspecting the image by the second inspection device 300 before the necking device 950 reduces the diameter of the opening, as in the exemplary embodiment, can avoid decrease in the inspection accuracy that may otherwise be caused by distortion of the can body 10.

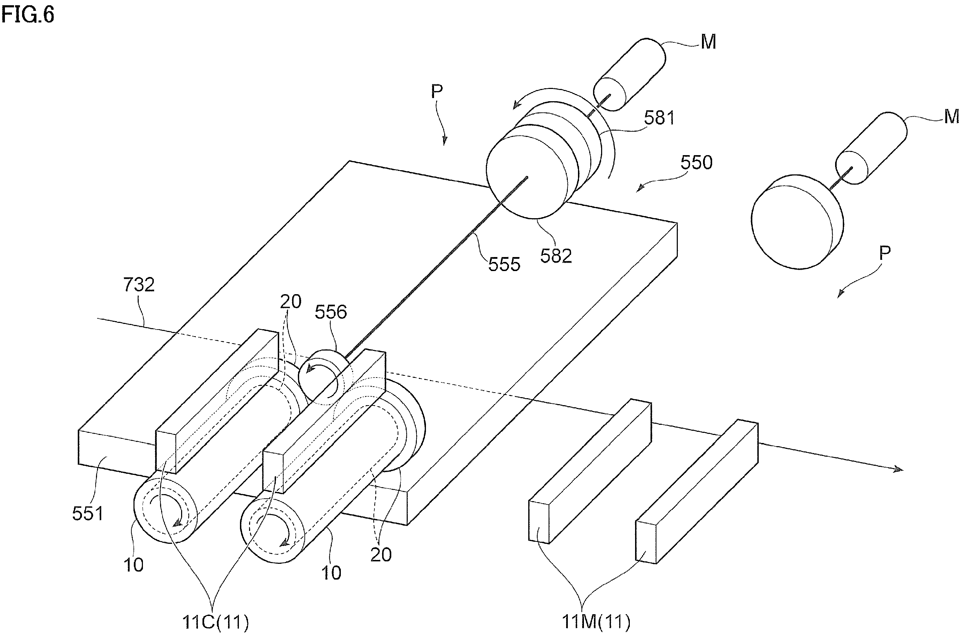

FIG. 6 illustrates the first inkjet head 11C, the second inkjet head 11M, and the moving unit 550 when they are viewed in the direction of an arrow VI in FIG. 1.

Note that, in FIG. 6, illustration of the moving unit 550 positioned right below the second inkjet head 11M has been omitted.

As shown in FIG. 6, in the exemplary embodiment, a servomotor M as an example of a driving source to rotate the can body 10 is provided at each stop location P where the moving unit 550 stops, through illustration of the servomotor M has been omitted in FIG. 1.

To further illustrate, the servomotor M for rotating the can body 10 being supported by the moving unit 550 is provided beside the movement route 732 of the moving unit 550.

In the exemplary embodiment, the driving source (servomotor M) for rotating the can body 10 is not provided to the moving unit 550 but is provided to the main body of the printing system 500.

To further illustrate, in the exemplary embodiment, the driving source for rotating the can body 10 is not provided to the moving unit 550 but is provided at a different location from the moving unit 550.

This reduces the weight of the moving unit 550, which in turn reduces vibrations of the printing system 500 caused by movement of the moving units 550.

Here, if the moving unit 550 is provided with the driving source and thus has a large weight, vibrations of the printing system 500 due to stopping or other motions of the moving units 550 are likely to increase. This would cause the inkjet heads 11 and the like to vibrate, which would lead to degradation of image quality.

In contrast, the arrangement in the exemplary embodiment, in which the driving source is provided to the main body of the printing system 500, helps reduce the weight of the moving unit 550 and thus reduce vibrations of the printing system 500 caused by stopping or other motions of the moving units 550.

As shown in FIG. 6, the moving unit 550 includes the pedestal part 551.

Two can bodies 10 are provided on the pedestal part 551. The support member 20 is inserted into each of the can bodies 10, and thereby the can body 10 is supported by the support member 20.

The moving unit 550 further includes a transmission shaft 555 for transmitting a rotational driving force to the can body 10; in the exemplary embodiment, the rotational driving force from the servomotor M is transmitted to the can body 10 via the transmission shaft 555.

More specifically, in the exemplary embodiment, the moving unit 550 includes a rotation gear 556 that contacts each of the support members 20 to rotate it.

The transmission shaft 555 rotates the rotation gear 556, which in turn causes the can bodies 10 to rotate in the circumferential direction. Note that, in the exemplary embodiment, the two can bodies 10 provided to each moving unit 550 are rotated in the same direction.

In the exemplary embodiment, transmission of the driving force from the servomotor M, which is the driving source, to the moving unit 550 is carried out by so-called magnet coupling.

Specifically, in the exemplary embodiment, a driving source-side rotation body 581 rotated by the servomotor M is provided closer to the servomotor M (closer to the main body of the printing system 500).

Further, in the exemplary embodiment, a moving body-side rotation body 582 coaxial with the transmission shaft 555 is provided closer to the moving unit 550.

In the exemplary embodiment, the driving force is transmitted from the driving source-side rotation body 581 to the moving body-side rotation body 582, and thereby the can body 10 is rotated.

More specifically, in the exemplary embodiment, magnetic force causes the moving body-side rotation body 582 to rotate in synchronization with the driving source-side rotation body 581, whereby the driving force is transmitted from the driving source-side rotation body 581 to the moving body-side rotation body 582.

To further illustrate, in the exemplary embodiment, a magnet is provided to at least one of the driving source-side rotation body 581 and the moving body-side rotation body 582, and an attracted body to be attracted by the magnet is provided to the other one.

Consequently, in the exemplary embodiment, the magnetic force generated in the magnet is used to rotate the moving body-side rotation body 582 in synchronization with the driving source-side rotation body 581.

In the exemplary embodiment, rotation of the moving body-side rotation body 582 causes the transmission shaft 555 to rotate accordingly, which is followed by the rotation of the can body 10 in the circumferential direction.

In the exemplary embodiment, when the driving force is transmitted from the driving source-side rotation body 581 to the moving body-side rotation body 582 (when the moving unit 550 stops at the stop location P), as shown in FIG. 6, the driving source-side rotation body 581 and the moving body-side rotation body 582 are disposed to face each other.

Further, in the exemplary embodiment, the driving source-side rotation body 581 and the moving body-side rotation body 582 are disposed in a non-contact state at this time.

This contactless arrangement can prevent displacement of the moving unit 550 that would otherwise be caused by contact between the driving source-side rotation body 581 and the moving body-side rotation body 582, thus preventing an offset in image formation positions that would otherwise be caused by such displacement of the moving unit 550.

### [Others]

In the above description, the moving unit 550 is moved by using a so-called linear motor mechanism, but the mechanism for moving the moving unit 550 is not limited to the linear motor mechanism; for example, the moving unit 550 may be moved by attaching the moving unit 550 to an endless member (a member such as a belt or a chain) and orbitally moving the endless member.

Still alternatively, for example, it may be possible to provide a driving source, such as a motor, for moving the moving unit 550 to each of the moving units 550, to thereby move the moving unit 550 autonomously.

While the above description illustrates that the driving source (the servomotor M) is provided to the installation location of the inkjet head 11, the driving sources are provided to other locations, such as the first inspection device 92 (refer to FIG. 1), the light irradiation part 750, the second inspection device 300, and the protection layer forming part 770.

In the exemplary embodiment, in these other locations, the can body 10 is rotated by the driving source provided separately from the moving unit 550.

While the above description illustrates that the driving source-side rotation body 581 and the moving body-side rotation body 582 are disposed so as not to contact with each other, this is merely exemplary and the driving source-side rotation body 581 and the moving body-side rotation body 582 may be disposed in contact with each other so as to supply the driving force to the can body 10 via the mutually contacting driving source-side rotation body 581 and moving body-side rotation body 582.

While in the above description the driving source (the servomotor M) for rotating the can body 10 is provided at locations other than the moving unit 550, the driving source for rotating the can body 10 may be provided to the moving unit 550.

### Reference Signs List

- 300: Second inspection device
- 500: Printing system
- 700: Inkjet printing part
- 770: Protection layer formation part

## Claims

1. A printing system (500) comprising:
an image forming unit (700) configured to form an image on an outer surface of a can body (10) when the can body (10) is positioned on a linear can body movement route (800) with a linear shape disposed along a horizontal direction, wherein a vertical direction can body movement route that goes upward or downward is provided downstream, in a moving direction of a can body (10), from the linear can body movement route (800) with the linear shape disposed along the horizontal direction;
a paint application unit (770) configured to apply transparent paint onto the outer surface when the can body (10) is positioned on the vertical direction can body movement route, after the image is formed on the outer surface by the image forming unit (700);
an inspection unit (300) configured to inspect the image formed on the outer surface by the image forming unit (700) when the can body (10) is positioned on the linear can body movement route (800) with the linear shape, before application of the paint onto the outer surface by the paint application unit; and
a discharge unit (400) disposed upstream from the paint application unit (770) in a moving direction of a can body (10) and configured to discharge a can body (10) that is found to satisfy predetermined conditions as a result of inspection by the inspection unit (300), from a linear can body movement route (800), wherein the discharge unit (400) is configured to discharge a can body (10) satisfying the predetermined conditions when the can body (10) is positioned on the vertical direction can body movement route.

2. The printing system according to claim 1, wherein
the inspection unit includes an imaging unit configured to photograph the image on the outer surface, and
the imaging unit is configured to photograph the image on the outer surface of the can body when the can body is positioned on a can body movement route of a linear shape.

3. The printing system according to claim 1, further comprising a curing unit configured to cure an image formed on the outer surface by the image forming unit, wherein
the inspection unit is configured to inspect an image that has been cured by the curing unit and has not had the transparent paint applied thereon.

4. The printing system according to claim 1, wherein
the can body includes an opening,
the printing system further comprises a necking unit configured to reduce a diameter of the opening of the can body, and
the inspection unit is configured to inspect the image before the necking unit reduces the diameter of the opening of the can body.

5. A method for manufacturing a can body having an image formed thereon, the method using the printing system as described in any one of claims 1 to 4 and comprising:
forming an image on an outer surface of a can body;
applying transparent paint onto the outer surface after the image is formed on the outer surface; and
inspecting the image formed on the outer surface, before application of the paint onto the outer surface.

## Patentansprüche

1. Drucksystem (500), enthaltend:
eine Bilderzeugungseinheit (700), die so konfiguriert ist, dass sie ein Bild auf einer Außenfläche eines Dosenkörpers (10) erzeugt, wenn der Dosenkörper (10) auf einem linearen Dosenkörper-Bewegungsweg (800) mit einer entlang einer horizontalen Richtung linearen Form positioniert ist, wobei ein in vertikaler Richtung nach oben oder nach unten verlaufender Dosenkörper-Bewegungsweg in einer Bewegungsrichtung eines Dosenkörpers (10) stromabwärts von dem linearen Dosenkörper-Bewegungsweg (800) mit der entlang der horizontalen Richtung linearen Form vorgesehen ist;
eine Farbauftragungseinheit (770), die so konfiguriert ist, dass sie transparente Farbe auf die Außenfläche aufträgt, wenn der Dosenkörper (10) auf dem in vertikaler Richtung verlaufenden Bewegungsweg des Dosenkörpers positioniert ist, nachdem das Bild auf der Außenfläche durch die Bilderzeugungseinheit (700) erzeugt wurde;
eine Inspektionseinheit (300), die so konfiguriert ist, dass sie das auf der Außenfläche durch die Bilderzeugungseinheit (700) erzeugte Bild inspiziert, wenn der Dosenkörper (10) auf dem linearen Dosenkörper-Bewegungsweg (800) mit der linearen Form positioniert ist, bevor die Farbe durch die Farbauftragseinheit auf die Außenfläche aufgetragen wird; und
eine Ausstoßeinheit (400), die stromaufwärts von der Farbauftragungseinheit (770) in einer Bewegungsrichtung eines Dosenkörpers (10) angeordnet ist und so konfiguriert ist, dass sie einen Dosenkörper (10), von dem festgestellt wird, dass er vorbestimmte Bedingungen als Ergebnis einer Inspektion durch die Inspektionseinheit (300) erfüllt, von einem linearen Dosenkörper-Bewegungsweg (800) ausstößt, wobei die Ausstoßeinheit (400) so konfiguriert ist, dass sie einen Dosenkörper (10), der die vorbestimmten Bedingungen erfüllt, ausstößt, wenn der Dosenkörper (10) auf dem in vertikaler Richtung verlaufenden Dosenkörper-Bewegungsweg positioniert ist.

2. Drucksystem nach Anspruch 1, wobei
die Inspektionseinheit eine Abbildungseinheit enthält, die so konfiguriert ist, dass sie das Bild auf der Außenfläche fotografiert, und
die Abbildungseinheit so konfiguriert ist, dass sie das Bild auf der Außenfläche des Dosenkörpers fotografiert, wenn der Dosenkörper auf einer linearen Bewegungsstrecke des Dosenkörpers positioniert ist.

3. Drucksystem nach Anspruch 1, das ferner eine Aushärtungseinheit umfasst, die so konfiguriert ist, dass sie ein auf der Außenfläche durch die Bilderzeugungseinheit erzeugtes Bild aushärtet, wobei
die Inspektionseinheit so konfiguriert ist, dass sie ein Bild inspiziert, das durch die Aushärtungseinheit gehärtet wurde und auf das noch keine transparente Farbe aufgetragen wurde.

4. Drucksystem nach Anspruch 1, wobei
der Dosenkörper enthält eine Öffnung,
das Drucksystem außerdem eine Einschnürungseinheit umfasst, die so konfiguriert ist, dass sie den Durchmesser der Öffnung des Dosenkörpers zu verringert, und
die Inspektionseinheit so konfiguriert ist, dass sie das Bild inspiziert, bevor die Einschnürungseinheit den Durchmesser der Öffnung des Dosenkörpers verringert.

5. Verfahren zur Herstellung eines Dosenkörpers mit einem darauf ausgebildeten Bild, wobei das Verfahren das in einem der Ansprüche 1 bis 4 beschriebene Drucksystem verwendet und Folgendes umfasst:
Erzeugen eines Bildes auf einer Außenfläche eines Dosenkörpers;
Auftragen von transparenter Farbe auf die äußere Oberfläche, nachdem das Bild auf der äußeren Oberfläche erzeugt wurde; und
Inspizieren des auf der Außenfläche gebildeten Bildes vor dem Auftragen der Farbe auf die Außenfläche.

## Revendications

1. Système d'impression (500) comprenant :
une unité de formation d'image (700) configurée pour former une image sur une surface externe d'un corps de canette (10) lorsque le corps de canette (10) est positionné sur un trajet de mouvement de corps de canette (800) linéaire ayant une forme linéaire disposé le long d'une direction horizontale, dans lequel un trajet de mouvement de corps de canette suivant une direction verticale qui va vers le haut ou vers le bas est prévu en aval, dans une direction de déplacement d'un corps de canette (10), à partir du trajet de mouvement de corps de canette (800) linéaire ayant la forme linéaire disposé le long de la direction horizontale ;
une unité d'application de peinture (770) configurée pour appliquer une peinture transparente sur la surface externe lorsque le corps de canette (10) est positionné sur le trajet de mouvement de corps de canette suivant la direction verticale, après que l'image est formée sur la surface externe par l'unité de formation d'image (700) ;
une unité d'inspection (300) configurée pour inspecter l'image formée sur la surface externe par l'unité de formation d'image (700) lorsque le corps de canette (10) est positionné sur le trajet de mouvement de corps de canette (800) linéaire ayant la forme linéaire, avant application de la peinture sur la surface externe par l'unité d'application de peinture ; et
une unité de décharge (400) disposée en amont à partir de l'unité d'application de peinture (770) dans une direction de déplacement d'un corps de canette (10) et configurée pour décharger un corps de canette (10) qui s'avère satisfaire des conditions prédéterminées en résultat d'une inspection par l'unité d'inspection (300), à partir d'un trajet de mouvement de corps de canette (800) linéaire, dans lequel l'unité de décharge (400) est configurée pour décharger un corps de canette (10) satisfaisant les conditions prédéterminées lorsque le corps de canette (10) est positionné sur le trajet de mouvement de corps de canette suivant la direction verticale.

2. Système d'impression selon la revendication 1, dans lequel l'unité d'inspection comporte une unité d'imagerie configurée pour photographier l'image sur la surface externe, et
l'unité d'imagerie est configurée pour photographier l'image sur la surface externe du corps de canette lorsque le corps de canette est positionné sur un trajet de mouvement de corps de canette de forme linéaire.

3. Système d'impression selon la revendication 1, comprenant en outre une unité de durcissement configurée pour durcir une image formée sur la surface externe par l'unité de formation d'image, dans lequel
l'unité d'inspection est configurée pour inspecter une image qui a été durcie par l'unité de durcissement et n'a pas eu la peinture transparente appliquée sur celle-ci.

4. Système d'impression selon la revendication 1, dans lequel le corps de canette comporte une ouverture,
le système d'impression comprend en outre une unité de striction configurée pour réduire un diamètre de l'ouverture du corps de canette, et
l'unité d'inspection est configurée pour inspecter l'image avant que l'unité de striction réduise le diamètre de l'ouverture du corps de canette.

5. Procédé de fabrication d'un corps de canette ayant une image formée sur celui-ci, le procédé utilisant le système d'impression selon l'une quelconque des revendications 1 à 4 et comprenant :
la formation d'une image sur une surface externe d'un corps de canette ;
l'application de peinture transparente sur la surface externe après que l'image est formée sur la surface externe ; et l'inspection de l'image formée sur la surface externe, avant application de la peinture sur la surface externe.
